(19) Europäisches Patentamt
European Patent Office
Office européen des brevets

(11) EP 0 727 458 B1

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.[7]: **C08K 5/29**, C08L 21/00

(21) Anmeldenummer: **95115922.7**

(22) Anmeldetag: **10.10.1995**

(54) **Verhinderung oder Verringerung der Entstehung von Aminen und N-Nitrosaminen bei Fertigung und Gebrauch von Elastomeren**

Preventing or reducing the formation of amines and N-nitrosamines in the production and the use of elastomers

Inhibition ou réduction de la formation d'amines et de N-nitrosamines dans la fabrication et l'utilisation d'élastomères

(84) Benannte Vertragsstaaten:
**AT BE CH DE DK ES FR GB IT LI NL SE**

(30) Priorität: **18.02.1995 DE 19505649**

(43) Veröffentlichungstag der Anmeldung:
**21.08.1996 Patentblatt 1996/34**

(73) Patentinhaber: **Carl Freudenberg KG**
**69469 Weinheim (DE)**

(72) Erfinder:
- **Stein, Günter, Dr.**
  **D-69502 Hemsbach (DE)**
- **von Arndt, Ernst-Moritz, Dr.**
  **D-69469 Weinheim (DE)**

(74) Vertreter: **Hering, Hartmut**
**Patentanwälte**
**Berendt, Leyh & Hering**
**Innere Wiener Strasse 20**
**81667 München (DE)**

(56) Entgegenhaltungen:
**DE-C- 895 526**

- **DATABASE WPI Section Ch, Week 9015 Derwent Publications Ltd., London, GB; Class A60, AN 90-111198 XP002002417 & JP-A-02 060 949 (OUCHI SHINKO CHEM KK) , 1.März 1990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 727 458 B1

Printed by Jouve, 75001 PARIS (FR)

## Beschreibung

Aus Elastomerartikeln können flüchtige N-Nitrosamine an die Umgebung abgegeben werden. Diese wiederum können aus Kautschukchemikalien (z.B. Aktivatoren, Beschleunigern, Schwefelspendern und Verzögerern) gebildet werden, die Amine in gebundener Form enthalten. Bereits bei der Verarbeitung von Kautschukmischungen entstehen ebenfalls N-Nitrosamine. Bei der Bildung dieser Verbindungen sind sowohl $NO_x$ (zum Beispiel an Elastomerinhaltsstoffen adsorbiert oder aus der Umgebungsluft) als auch die entsprechenden sekundären Amine beteiligt.

Das Nitrosaminproblem ist in der Gummiindustrie seit vielen Jahren bekannt. Der Druck zur Eliminierung kanzerogener N-Nitrosamine wird durch gesetzliche Vorgaben betreffend die Maximalkonzentrationen verstärkt.

In Kautschuk + Gummi. Kunststoffe, Vol. 43 (1990), No. 2, pp. 107-113, wird der Einsatz von Inhibitoren zur Bindung der kritischen sekundären Amine untersucht. Insbesondere ergaben Versuche mit Oxim-blockierten Isocyanaten zur Inhibierung von Methylphenylamin aus Dimethyldiphenylthiuramdisulfid keine Verminderung der freiwerdenden N- Nitrosomethylphenylamin (NMPhA)-Menge. Dieses Verfahren wird daher von den Autoren bei einer für Elastomere üblichen Dosis an blockiertem Isocyanat als ineffektiv angesehen.

Die DE-C-895 526 schlägt zur Verbesserung der Haftfestigkeit von Kautschuk auf beliebigen Unterlagen durch Vulkanisieren von Kautschukmischungen vor, daß die Kautschukmischung einen Zusatz von Diisocyanaten enthält.

Die JP-A-02 060 949 (OUCHI SHINKO CHEM KK) offenbart die Möglichkeit Benzothiazol-Sulphenamid-Vulkanisationsbeschleuniger zu stabilisieren, d.h., die Bildung freier Aminoverbindungen bei vergleichsweise hoher Lagertemperatur oder hoher Feuchtigkeit zu verhindern oder zu verzögern, in dem Dibutylzinn-Carboxylat, eine Isocyanatverbindung und eine oder mehrere spezielle heterocyclische und Organosilikat-Verbindungen hinzugefügt werden. Durch die Zugabe einer oder mehrerer der vorgenannten Verbindungen kann die Bildung des unangenehmenAmingeruchs vermindert werden, da die freien Amine, die durch Alterung entstehen, gebunden werden und so die Benzothiazolsulphenamid-Vulkanisationsbeschleuniger bei den gewünschten Lager- und Anwendungsbedingungen stabilisiert werden.

Die Aufgabe der vorliegenden Erfindung ist es, chemische Verbindungen, im folgenden Amin-Inhibitoren genannt, anzugeben, deren Verwendung zur Blockierung toxische Nitrosamine bildender Amine nicht nur bei der Vulkanisation, sondern auch bei Lagerung, Montage und Einbau des Elastomerwerkstoffs bzw. der Elastomerbauteile führt. Insbesondere soll folgendes erreicht werden:

- Verhinderung oder deutliche Einschränkung des Entstehens von N-Nitrosaminen bei Herstellung und Anwendung der Elastomeren.
- Verhinderung oder deutliche Einschränkung auch des Ausgasens von in der Regel gebildeten freien Aminen bei Herstellung, Lagerung, Transport oder Montage der Elastomerteile sowie in deren Einbauzustand und damit Verhinderung der nachträglichen Bildung entsprechender N-Nitrosamine.
- Jeweils gleichzeitige Beibehaltung oder zumindest nur geringe Beeinträchtigung der mechanisch-technologischen Eigenschaften, des Druckverformungsrests sowie der Beständigkeits- und Funktionseigenschaften der Vulkanisate.
- Verhinderung oder Verringerung von Ausblühungen an der Oberfläche der Vulkanisate, hervorgerufen durch Reaktionsprodukte aus Vernetzungsreaktionen.

Gelöst wird diese Aufgabe durch die im Patentanspruch dargelegte Maßnahme. Deren vorteilhafte Varianten sind in den Unteransprüchen dargestellt.

Die Erfindung beruht auf der Verwendung von Verbindungen, die erst unter Vulkanisationsbedingungen mono- oder multifunktionelle Isocyanate der allgemeinen Formel

$$R \cdot (N{=}C{=}O)_x$$

mit R: Beliebiger organischer Rest; $x \geq 1$,

in zu vulkanisierenden Elastomermischungen als Inhibitoren für die Amine bilden, zum Beispiel Harnstoffderivate oder als "blockierte Isocyanate" bezeichnete Verbindungen. Ihr Vorteil besteht darin, daß sie, verglichen mit freien Isocyanaten, eine bessere Hydrolysebeständigkeit zeigen und das Vulkanisationsverhalten der Elastomermischungen weniger beeinflussen.

Die Blockierung der Isocyanatgruppen der Verbindungen der oben genannten Formel ist dabei durch Umsetzung mit aktiven Wasserstoff enthaltenden Verbindungen möglich, schematisch gemäß

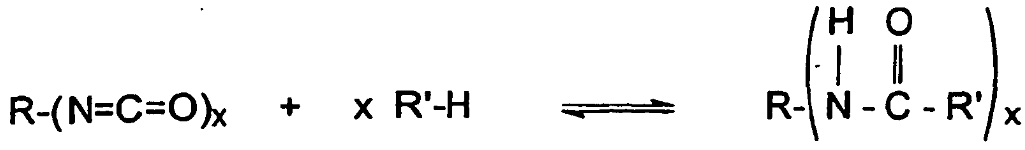

Inhibitor Blockierungsmittel

mit R, R': Beliebige organische Reste; x ≥ 1.

Bei der Verwendung von Verbindungen, die erst unter Vulkanisationsbedingungen chemische Stoffe mit funktionellen Isocyanatgruppen als Amininhibitoren freisetzen, ist zu beachten, daß die Reaktivität des Blockierungsmittels R' - H gegenüber dem Isocyanat geringer ist als die entsprechende Reaktivität der zu inhibierenden Amine. Entsprechende Informationen bezüglich der Abstufung der Reaktivität dieser Verbindungsklassen sind der Literatur entnehmbar.

Verwendet man für die chemische Blockierung der Isocyanate primäre Amine, und werden diese bei der Aufspaltung unter Vulkanisationsbedingungen freigesetzt, so treten sie bei einer möglichen Nitrosierung in Konkurrenz mit den zu inhibierenden sekundären Aminen aus der Elastomermischung. Wegen der gegenüber $NO_x$ meist höheren Reaktivität der primären Amine entstehen bevorzugt deren unschädliche Nitrosierungsprodukte. Statt der primären Amine kann auch Ammoniak entstehen, welcher in gleicher Weise mit den sekundären Aminen in Konkurrenz tritt.

Neben der Blockierung der Isocyanatgruppen mit aktivem Wasserstoff enthaltenden Blockierungsmitteln, können die Isocyanatgruppen auch durch die Bildung von Uretdionstrukturen blockiert werden. Die blockierten Isocyanatgruppen können in dimerer, oligomerer oder polymerer Form vorliegen.
Bevorzugt verwendet man hierbei Verbindungen, welche Uretdionstrukturen aufweisen, die vereinfacht gemäß der Gleichung

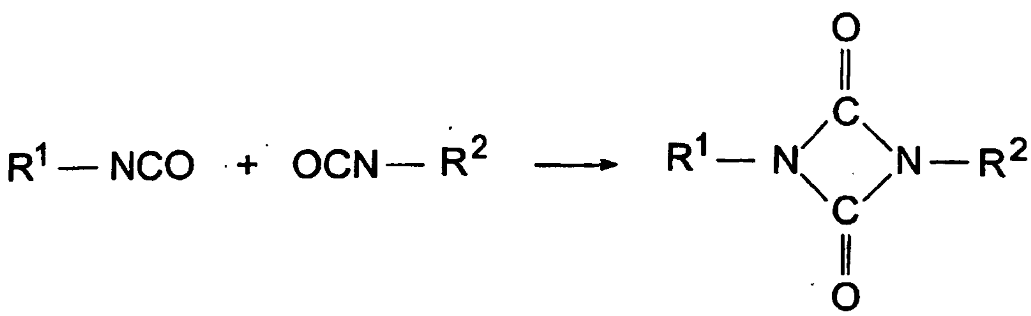

entstehen dürften, wobei $R^1$ und $R^2$ beliebige organische Reste darstellen. Beide Blockierungsarten können im Rahmen der Erfindung auch kombiniert werden.

Die Dosierung des gewählten Amininhibitors erfolgt entsprechend seiner Anzahl an aktiven bzw. aktivierbaren NCO-Gruppen und entsprechend der Menge der unter Vulkanisationsbedingungen freigesetzten Amine. Dabei wird man meist eine zu der theoretisch höchstmöglichen Menge an freisetzbaren Aminen stöchiometrische Dosierung wählen. Die Wahl einer überstöchiometrischen Isocyanat (-spender)-Dosierung wirkt sich aufgrund der Konzentrationserhöhung beschleunigend auf die Inhibierung der Amine aus. Unterstöchiometrische Dosierungen können im Gegensatz dazu nur zur teilweisen Inhibierung der Amine führen, was zum Beispiel aus wirtschaftlichen Gründen zweckmäßig sein kann.

Sind in der Gummimischung Bestandteile enthalten, die in Konkurrenz mit den zu inhibierenden Aminen ebenfalls mit Isocyanaten reagieren können, so ist das Isocyanat bzw. der Isocyanatspender entsprechend höher zu dosieren, um seine volle Wirksamkeit zu entfalten. Solche Bestandteile können z.B. Alkohole, Phenole oder Amine sein.

Auch Mercaptobenzthiazol kann wegen seiner funktionellen -SH - Gruppe mit Isocyanaten reagieren. Deshalb ist man mit der Erfindung in der Lage, auch diesen toxischen Elastomerbestandteil wirkungsvoll zu blockieren.

Durch die chemische Bindung der Amine werden, im Vergleich zu den Materialien ohne Amininhibitorzusatz, bei der Vulkanisation andere Reaktionsprodukte gebildet. Aufgrund der unterschiedlichen Molekülgröße und Löslichkeit dieser Stoffe in der Elastomermatrix werden entsprechende Ausblühungen an der Vulkanisatoberfläche ganz oder

teilweise unterdrückt.

Ein detaillierter Einblick in die Wirksamkeit der Amin-Inhibitoren und deren Einfluß auf die mechanisch-technologischen und andere wichtige Eigenschaften der Elastomer-Vulkanisate entsprechend der Aufgabenstellung wird in den nachfolgenden Beispielen gegeben.

Beispiele

Vorbemerkungen

Da es genügt, bei allen Aussagen zur Wirksamkeit jeweils nur vergleichend zwischen Elastomer-Materialien ohne und mit Amininhibitor-Zusatz zu unterscheiden, war es in erster Linie wichtig, auf möglichst gute Vergleichbarkeit der Meßwerte zu achten. Vergleichsbeispiele, in denen nicht blockierte Isocyanatgruppen verwendet werden, sind mit einem Stern (*) gekennzeichnet.

Im einzelnen wurden die in den späteren Beispielen genannten Mischungsserien den folgenden Prüfungen unterzogen:

| **Prüf-methode** | **Meßprinzip** |
|---|---|
| | |
| A 1 | Freie Amine im Pressendampf<br>Absaugen von Luft an der Vulkanisationspresse im Bereich des geöffneten Vulkanisationswerkzeugs. Saugleistung: 500 ml/min; Saugzeit: 2 h. Adsorption der Amine mittels präpariertem Silicagel in Adsorptionsröhrchen, Desorption mit Salzsäure, quantitative Bestimmung nach Derivatisierung mit Dansylchlorid (5-Dimethyl-aminonaphthalin-1-sulfochlorid, DNSCI) mit HPLC. Angabe in mg Amin / $m^3$ Luft. |
| | |
| A 2 | Ausgasende Amine aus Vulkanisat<br>Zerkleinern einer frisch hergestellten Prüfplatte (200 mm x 200 mm x 2 mm) in quadratische Stücke der Kantenlänge 5 mm, Einfüllen in eine Gaswaschflasche, Durchleiten von 100 l Luft bei einer Saugleistung von 750 ml/min; Adsorption der Amine mittels präpariertem Silicagel in Adsorptionsröhrchen, Desorption mit Salzsäure, quantitative Bestimmung nach Derivatisierung mit Dansylchlorid (5-Dimethyl-aminonaphthalin-1-sulfochlorid, DNSCI) mit HPLC. Angabe in mg Amin / $m^3$ Luft. |
| | |
| | |
| NA 1 | Nitrosamine im Pressendampf<br>Absaugen von Luft an der Vulkanisationspresse im Bereich des geöffneten Vulkanisationwerkzeuges. Saugleistung 1660 ml/min, Saugzeit 2 h; Adsorption der Nitrosamine in hierfür geeigneten, handelsüblichen Adsorptions-Röhrchen. Desorption durch Lösungsmittel. Gaschromatographische Trennung, TEA-Detektor (Thermal Energy Analyzer) mit massenspektrometischer Absicherung.<br>Angabe in µg N-Nitrosamin / Röhrchen. |
| NA 2 | Nitrosamine im Vulkanisat<br>Vorgehensweise in Anlehnung an D.C. Havery, T. Fazio; Food Chem. Toxicol. 20 (1982) 6, pp. 939-944: Lösemittelextraktion des Vulkanisats, Wasserdampfdestillation der Nitrosamine, Lösemittelextraktion des wäßrigen Destillats, Aufkonzentration des organischen Extrakts, gaschromatographische Trennung, TEA-Detektor mit massenspektrometischer Absicherung.<br>Angabe in mg N-Nitrösamin / kg. |
| | |

Die im folgenden "blockierte Isocyanate" genannten Inhibitoren sind als Handelsprodukte unter verschiedenen Markennamen verfügbar.

**Herstellung der Mischungsvarianten**

Bei den aufgeführten Beispielen wurde zur optimalen Vergleichbarkeit der Ergebnisse folgende Vorgehensweise gewählt:

- Herstellung eines Mischungsgrundbatches im Innenmischer
- Aufmischen der Vernetzersubstanzen auf einem Laborwalzwerk
- Aufteilung des Batches entsprechend der Anzahl der zu untersuchenden Amininhibitoryarianten
- Einmischen des jeweiligen Inhibitors auf einem Laborwalzwerk

Dadurch wurden Schwankungen und Einflüsse aufgrund unterschiedlicher Bedingungen bei der Mischungsherstellung weitestgehend vermieden.
Lag der Schmelzpunkt der Inhibitorsubstanz höher als die auf dem Mischwalzwerk erreichte Temperatur von ca. 90°C, so mußte von dieser Vorgehensweise abgewichen werden. In diesen Fällen wurde der Inhibitor bereits im Innenmischer zugegeben. Bei blockierten Inhibitoren soll dabei die Temperatur im Innenmischer oberhalb des Schmelzpunktes, jedoch unterhalb der Aufspalttemperatur liegen.
Stellvertretend für die mit Schwefel vernetzbaren, doppelbindungshaltigen Kautschuke wurde Nitril-Butadien-Kautschuk (NBR) mit einem mittleren Acrylnitrilgehalt eingesetzt. In allen Beispielen wurde dabei die gleiche Grundrezeptur eingesetzt. Schwefel wurde zur besseren Verteilbarkeit bereits gegen Ende des Mischprozesses im Innenmischer zugegeben.
Grundrezeptur (Mengenangaben in phr = Gewichtsteile pro 100 Gewichtsteile Kautschuk):

| | |
|---|---|
| Acrylnitril-Butadien-Copolymer, 28% ACN-Gehalt | 100,-- |
| Zinkoxid (90%) | 5,5 |
| Stearinsäure | 1,-- |
| Zinksalz von 4- und 5-Methylmercaptobenzimidazol | 1,-- |
| Paraffinwachs | 1,-- |
| Ruß N 550 | 60,-- |
| Schwefel | 0,5 |
| Gesamt: | 169,-- |

**Beispiel 1:**

Den Einfluß einer Auswahl von Verbindungen gemäß Anspruch 1 und 3 auf die Vulkanisations- und Vulkanisateigenschaften bei einem Vernetzungssystem A, bestehend aus (Angaben in phr)

| | | | | | |
|---|---|---|---|---|---|
| TMTD | 1,5 | ⇒ | DMA | ⇒ | NDMA |
| DMPhTD | 1,5 | ⇒ | MPhA | ⇒ | NMPhA |
| MBS | 1,-- | ⇒ | MOR | ⇒ | NMOR |
| DTDM | 1,-- | ⇒ | MOR | ⇒ | NMOR |

und aus den daraus resultierenden, entsprechenden Aminen bzw.
N-Nitrosaminen, zeigen die folgenden Zusammenstellungen.
Art und Menge (phr) der eingesetzten Amininhibitoren:

| Amininhibitor / Variante | A 1 | A 2* | A 3* | A 4* | A 5 |
|---|---|---|---|---|---|
| 3,4-Dichlorphenyl-isocyanat | - | 6,2 | - | - | - |
| IPDI (3-Isophoron-diisocyanat) | - | - | 3,7 | - | - |
| MDI (Methylendiphenyl-diisocyanat) | - | - | - | 4,1 | - |
| Blockiertes Isocyanat gem. Anspruch 1 (NCO-Gehalt = 15,3%) | - | - | - | - | 9,3 |

Die Menge an Inhibitor wird hier und im folgenden in der in der Gummibranche üblichen Einheit phr ("parts per hundred rubber") angegeben. Die für die Beschreibung chemischer Umsetzungen übliche Bezugsgröße Mol-%, die die zahlenmäßigen Angahen unabhängig von den jeweiligen Molekulargewichten der Reaktionspartner macht, ist jedoch in Kenntnis der angegeben Stoffe leicht errechenbar.

Bei der Vulkanisation bzw. an den Vulkanisaten erhaltene Meßergebnisse:

**Vulkameterdaten nach DIN 53 529 (Monsanto MDR 2000 E), T = 180°C:**

| Variante | | A 1 | A 2* | A 3* | A 4* | A 5 |
|---|---|---|---|---|---|---|
| Minimales Drehmoment | dNm | 1,70 | 1,46 | 1,65 | 1,45 | 1,73 |
| Maximales Drehmoment | dNm | 36,1 | 29,2 | 33,3 | 34,8 | 32,5 |
| $t_{s2}$ | min | 0,60 | 0,63 | 0,62 | 0,65 | 0,61 |
| $t_{0,90}$ | min | 1,48 | 1,82 | 1,69 | 2,50 | 1,56 |
| Max. Geschwindigkeit | dNm/min | 44,8 | 28,7 | 35,7 | 21,1 | 42,5 |

**Mechanisch-technologische Eigenschaften**

| Variante | | A 1 | A 2* | A 3* | A 4* | A 5 |
|---|---|---|---|---|---|---|
| Härte Shore A | | 75 | 73 | 75 | 76 | 76 |
| Spannwert bei 100% Dehnung | MPa | 6,7 | 5,8 | 6,7 | 6,0 | 6,8 |
| Zugfestigkeit | MPa | 20,9 | 20,6 | 21,2 | 21,6 | 20,1 |
| Bruchdehnung | % | 282 | 321 | 290 | 328 | 271 |

**Druckverformungsrest**

| Variante | | A 1 | A 2* | A 3* | A 4* | A 5 |
|---|---|---|---|---|---|---|
| 24 h/100°C 25% Def. | % | 10 | 12 | 12 | 15 | 10 |

**Lagerung in Heißluft. 3 Tage / 100°C**

| Variante | | A 1 | A 2* | A 3* | A 4* | A 5 |
|---|---|---|---|---|---|---|
| Härte Shore A | | 78 | 76 | 78 | 80 | 79 |
| (Δ Härte Shore A) | | (+ 3) | (+ 3) | (+ 3) | (+ 4) | (+ 3) |
| Zugfestigkeit | MPa | 23,6 | 21,4 | 23,3 | 22,9 | 22,8 |
| (Δ Zugfestigkeit | %) | (+ 13) | (+ 4) | (+ 10) | (+ 6) | (+ 9) |
| Bruchdehnung | % | 240 | 257 | 249 | 266 | 230 |
| (Δ Bruchdehnung | %) | (-15) | (- 20) | (- 14) | (- 19) | (- 15) |

**Lagerung in Heißluft, 14 Tage / 100°C**

| Variante | | A 1 | A 2* | A 3* | A 4* | A 5 |
|---|---|---|---|---|---|---|
| Härte Shore A | | 82 | 82 | 80 | 84 | 81 |
| (Δ Härte Shore A) | | (+ 7) | (+ 9) | (+ 5) | (+ 8) | (+ 5) |
| Zugfestigkeit | MPa | 23,8 | 21,2 | 23,7 | 21,8 | 21,7 |
| (Δ Zugfestigkeit | %) | (+ 14) | (+ 3) | (+ 12) | (+ 1) | (+ 8) |
| Bruchdehnung | % | 183 | 183 | 194 | 180 | 187 |
| (Δ Bruchdehnung | %) | (- 35) | (- 43) | (- 33) | (- 45) | (- 31) |

**Ausgasende Amine aus Vulkanisat (Prüfmethode A 2)**

Mengenangaben in mg Amin / $m^3$; in Klammern die relativen Anteile in Prozent im Vergleich zu Variante A1 (ohne Amininhibitor)

| Variante / Amin | A 1 | A 2* | A 3* | A 4* | A 5 |
|---|---|---|---|---|---|
| DMA | 0,7 | < 0,1 | < 0,1 | < 0,1 | < 0,1 |
| MOR | 1,03 | < 0,1 | < 0,1 | < 0,1 | < 0,1 |
| MPhA | 15,4 | 10,2 | 12,5 | 11,5 | 12,8 |
| | | (66) | (81) | (75) | (83) |

**Nitrosamine im Pressendampf (Prüfmethode NA 1)**

Mengenangaben in µg Nitrosamin/Röhrchen;
Vulkanisationsbedingungen: 185°C / 4 min

| Nitrosamin / Variante | A 1 | A 2* | A 3* | A 4* | A 5 |
|---|---|---|---|---|---|
| NDMA | < 0,01 | < 0,01 | < 0,01 | < 0,01 | < 0,01 |
| NMOR | < 0,01 | < 0,01 | < 0,01 | < 0,01 | < 0,01 |
| NMPhA | 15,0 | 12,3 | 13,1 | 11,6 | 13,5 |

Man erkennt folgendes:

- Die verwendeten Amininhibitoren haben keinen großen Einfluß auf das Vulkanisationsverhalten. Insbesondere die Anvulkanisationszeit $t_{s2}$, die ein wichtiges Kriterium für die Verarbeitungssicherheit einer Elastomermischung darstellt, bleibt praktisch unverändert. Alle aufgeführten Inhibitoren ergeben ein tendenziell geringeres maximales Drehmoment;
  die $t_{0,90}$-Zeiten werden geringfügig verlängert mit entsprechend einhergehender Verringerung der maximalen Vulkanisationsgeschwindigkeit
- Die mechanisch-technologischen Eigenschaften werden im Vergleich zu dem Werkstoff ohne Amininhibitor nur unwesentlich verändert, teilweise sogar verbessert. Abweichungen in der Shore-Härte oder im Spannwert können bei Bedarf durch geringfügige Änderung des Füllstoffanteils korrigiert werden.
- Der Druckverformungsrest bleibt gleich bzw. wird nur unwesentlich erhöht.
- Die Alterungsbeständigkeit der Vulkanisate sowohl bei 3 Tagen als auch bei 14 Tagen/100°C ist innerhalb der Meßgenauigkeit als gleich anzusehen.
- Die aus den Vulkanisaten an die Umgebungsluft freigesetzten Mengen an Aminen als Reaktionsprodukte der eingesetzten Vernetzerchemikalien werden gegenüber der Variante ohne Amininhibitor im Falle des Methylphenylamins deutlich herabgesetzt, bei Dimethylamin und Morpholin sogar unter die Nachweisgrenze der verwendeten analytischen Besfimmungsmethode. Analoges gilt für die Reduzierung der Menge der bei der Vulkanisation emittierten N-Nitrosamine.

Da die Freisetzung von Methylphenylamin bzw. dem entsprechenden N-Nitrosomethylphenylamin mit den eingesetzten Inhibitormengen nur zum Teil unterdrückt werden konnte, stand wegen der bezüglich der freisetzbaren Amingesamtmenge stöchiometrischen Dosierung der Inhibitoren für die beiden Amine Dimethylamin und Mo pholin ein Überschuß an Amininhibitor zur Verfügung. Zur völligen Reduzierung der freigesetzten Menge an Methylphenylamin bzw. dem entsprechenden N-Nitrosamin ist zur Erhöhung der Inhibierungsgeschwindigkeit ein deutlicher Überschuß an Amininhibitor(en) notwendig, ggf. bei noch höherer Vulkanisationstemperatur. In dem folgenden Beispiel 2 wurde aus diesen Gründen auf den Einsatz des Beschleunigers DMPhTD vollständig verzichtet.

**Beispiel 2:**

Um ein möglichst umfassendes Bild der Inhibitorwirkung der eingesetzten Chemikalien aufzuzeigen, wurde mit einem Vulkanisationssystem B gearbeitet, das einen oder mehrere Vertreter aus den wichtigsten Beschleuniger- bzw. Schwefelspenderklassen aufweist und dessen Komponenten allesamt als Lieferanten für cancerogene N-Nitrosamine bildende Amine bekannt sind.
Dieses Vulkanisationssystem B bestand aus (Angaben in phr):

| | | | | | |
|---|---|---|---|---|---|
| TMTD | 2,-- | ⇒ | DMA | ⇒ | NDMA |
| ZDMC | 1,-- | ⇒ | DMA | ⇒ | NDMA |
| TBTD | 1,-- | ⇒ | DBA | ⇒ | NDBA |
| MBS | 1,5 | ⇒ | MOR | ⇒ | NMOR |
| DTDM | 1,-- | ⇒ | MOR | ⇒ | NMOR |
| OTOS | 1,-- | ⇒ | MOR | ⇒ | NMOR |

Die folgenden Tabellen zeigen Art und Menge (phr) der eingesetzten Amininhibitoren sowie die mit den entsprechenden Vulkanisaten erhaltenen Meßergebnisse, bezogen auf die angegebenen Patentansprüche.

| Variante / Amininhibitor | B 1 | B 2* | B 3* | B 4* | B 5* | B 6 | B 7 | B 8 |
|---|---|---|---|---|---|---|---|---|
| IPDI | - | 5,2 | - | - | - | - | - | - |
| $H_{12}$-MDI (Methylendicyclohexyldiisocyanat) | - | - | 6,1 | - | - | - | - | - |
| MDI | - | - | - | 5,8 | - | - | - | - |
| TODI (Tolidindiisocyanat) | - | - | - | - | 6,1 | - | - | - |
| Blockiertes Isocyanat (Anspruch 1), NCO-Gehalt =15,3% | - | - | - | - | - | 12,8 | - | - |
| Blockiertes Isocyanat NCO-Gehalt =15,3% | - | - | - | - | - | - | 12,8 | - |
| Blockiertes Isocyanat (Anspruch 2), NCO-Gehalt = 17% | - | - | - | - | - | - | - | 11,5 |

<u>**Vulkameterdaten nach DIN 53 529 (Monsanto MDR 2000 E). T = 180°C**</u>

| Variante | | B 1 | B 2* | B 3* | B 4* | B 5* | B 6 | B 7 | B 8 |
|---|---|---|---|---|---|---|---|---|---|
| Minimales Drehmoment | dNm | 1,77 | 1,67 | 1,55 | 1,72 | 1,73 | 1,70 | 1,28 | 2,11 |
| Maximales Drehmoment | dNm | 33,6 | 32,3 | 32,8 | 34,5 | 39,4 | 34,9 | 28,4 | 33,7 |
| $t_{s2}$ | min | 0,51 | 0,53 | 0,54 | 0,53 | 0,56 | 0,49 | 0,56 | 0,50 |
| $t_{0,90}$ | min | 1,49 | 1,78 | 1,71 | 2,55 | 1,85 | 1,46 | 1,56 | 1,64 |
| max. Geschwindigkeit | dNm/min | 48,5 | 35,4 | 35,6 | 21,1 | 38,1 | 48,4 | 38,4 | 39,3 |

**Mechanisch-technologische Eigenschaften**

| Variante | | B 1 | B 2* | B 3* | B 4* | B 5* | B 6 | B 7 | B 8 |
|---|---|---|---|---|---|---|---|---|---|
| Härte Shore A | | 76 | 76 | 75 | 76 | 78 | 76 | 72 | 78 |
| Spannwert bei 100% Dehnung | MPa | 8,8 | 7,4 | 7,7 | 8,1 | 8,3 | 8,1 | 6,5 | 9,3 |
| Zugfestigkeit | MPa | 19,8 | 21,3 | 21,2 | 20,8 | 20,3 | 21,9 | 22,1 | 20,2 |
| Bruchdehnung | % | 196 | 243 | 249 | 231 | 226 | 234 | 279 | 204 |

**Druckverformungsrest**

| Variante | | B 1 | B 2 | B 3 | B 4 | B 5 | B 6 | B 7 | B 8 |
|---|---|---|---|---|---|---|---|---|---|
| 24 h/ 100°C 25% Def. | % | 11 | 17 | 16 | 17 | 17 | 10 | 11 | 13 |

**Lagerung in Heißluft, 3 Tage / 100°C**

| Variante | | B 1 | B 2* | B 3* | B 4* | B 5* | B 6 | B 7 | B 8 |
|---|---|---|---|---|---|---|---|---|---|
| Härte Shore A | | 81 | 80 | 81 | 82 | 83 | 81 | 77 | 83 |
| (Δ Härte Shore A) | | (+ 5) | (+ 4) | (+ 6) | (+ 6) | (+ 5) | (+ 5) | (+ 5) | (+ 5) |
| Zugfestigkeit | MPa | 23,4 | 21,3 | 22,5 | 23,3 | 19,7 | 23,9 | 23,0 | 21,0 |
| (Δ Zugfestigkeit | %) | (+ 18) | (± 0) | (+ 6) | (+ 12) | (- 3) | (+ 9) | (+ 4) | (+ 4) |
| Bruchdehnung | % | 168 | 201 | 194 | 196 | 161 | 204 | 226 | 167 |
| (Δ Bruchdehnung | %) | (- 14) | (- 19) | (- 22) | (- 15) | (- 29) | (- 13) | (- 19) | (-18) |

**Lagerung in Heißluft, 14 Tage / 100°C**

| Variante | | B 1 | B 2* | B 3* | B 4* | B 5* | B 6 | B 7 | B 8 |
|---|---|---|---|---|---|---|---|---|---|
| Härte Shore A | | 83 | 84 | 84 | 84 | 84 | 85 | 82 | 85 |
| (Δ Härte Shore A) | | (+ 7) | (+ 8) | (+ 9) | (+ 8) | (+ 6) | (+ 9) | (+10) | (+ 7) |
| Zugfestigkeit | MPa | 22,2 | 19,2 | 20,1 | 18,9 | 20,3 | 22,3 | 21,7 | 17,8 |
| (Δ Zugfestigkeit | %) | (+ 12) | (- 10) | (- 5) | (- 9) | (± 0) | (+ 2) | (- 2) | (-12) |
| Bruchdehnung | % | 113 | 114 | 122 | 118 | 117 | 129 | 128 | 104 |
| (Δ Bruchdehnung | %) | (- 42) | (- 54) | (- 51) | (- 49) | (- 48) | (- 45) | (- 54) | (-49) |

**Freie Amine im Pressendampf (Prüfmethode A 1)**

Mengenangaben in mg Amin/m$^3$; die in Klammern angegebenen Werte geben den relativen Anteil in Prozent im Vergleich zur Variante B 1 (ohne Amininhibitor) an. Vulkanisationsbedingungen: 190°C / 2 min.

| Variante / Amin | B 1 | B 2* | B 3* | B 4* | B 5* | B 6 | B 7 | B 8 |
|---|---|---|---|---|---|---|---|---|
| DMA (Dimehtylamin) | 4,42 | 0,32 (7,2) | 0,21 (4,8) | 0,36 (8,1) | 0,43 (9,7) | 0,19 (4,3) | 0,26 (5,9) | 0,52 (11,8) |
| MOR (Morpholin) | 10,7 | 0,51 (4,8) | 0,48 (4,5) | 0,66 (6,2) | 0,78 (7,3) | 0,32 (3,0) | 0,46 (4,3) | 0,91 (8,5) |
| DBA (Di-n-butylamin) | 1,37 | < 0,1 | < 0,1 | < 0,1 | < 0,1 | < 0,1 | < 0,1 | < 0,1 |

Ausgasende Amine aus Vulkanisat (Prüfmethode A 2)

Mengenangaben in mg Amin/$m^3$; die in Klammern angegebenen Werte geben den relativen Anteil in Prozent im Vergleich zur Variante B 1 (ohne Amininhibitor) an.
Vulkanisationsbedingungen: 190°C / 2 min

| Variante / Amin | B 1 | B 2* | B 3* | B 4* | B 5* | B 6 | B 7 | B 8 |
|---|---|---|---|---|---|---|---|---|
| DMA | 11,28 | < 0,1 | 0,23 (2,0) | < 0,1 | 0,14 (1,2) | < 0,1 | < 0,1 | 0,11 (1,0) |
| MOR | 8,34 | < 0,1 | 0,12 (1,4) | < 0,1 | < 0,1 | < 0,1 | < 0,1 | < 0,1 |
| DBA | 0,92 | < 0,1 | < 0,1 | < 0,1 | < 0,1 | < 0,1 | < 0,1 | < 0,1 |

Nitrosamine im Pressendampf (Prüfmethode NA 1)

Mengenangaben in µg Nitrosamin/Röhrchen;
Vulkanisationsbedingungen: 190°C / 2 min

| Variante / Nitrosamin | B 1 | B 2* | B 3* | B 4* | B 5* | B 6 | B 7 | B 8 |
|---|---|---|---|---|---|---|---|---|
| NDMA (N-Nitrosodimethylamin) | 0,44 | 0,03 | 0,02 | 0,04 | 0,03 | 0,03 | 0,02 | 0,03 |
| NMOR (N-Nitrosomorpholin) | 0,98 | 0,05 | 0,03 | 0,06 | 0,02 | 0,05 | 0,04 | 0,03 |
| NDBA (N-Nitroso-n-butylamin) | < 0,01 | < 0,01 | < 0,01 | < 0,01 | < 0,01 | < 0,01 | <0,01 | < 0,01 |

Nitrosamine im Vulkanisat (Prüfmethode NA 2)

Mengenangaben in mg/kg; Nachweisgrenzen:
NDMA, NDBA: 0,02 mg/kg; NMOR: 0,05 mg/kg

| Variante / Nitrosamin | B 1 | B 2 - B 8 |
|---|---|---|
| NDMA | < 0,02 | < 0,02 |
| NMOR | < 0,05 | < 0,05 |
| NDBA | 0,06 | < 0,02 |

Die in den Tabellen aufgelisteten Ergebnisse zeigen folgendes:

- Ebenso wie bei der ersten Mischungsserie (A 1 bis A 5) ergibt sich auch bei den Mischungen B 2 bis B 8 nur ein geringer, tendenziell ähnlicher Einfluß des eingesetzten Amininhibitors auf das Vulkanisationsverhalten.

- Die mechanisch-technologischen Eigenschaften werden ebenfalls nur unwesentlich verändert, teilweise sogar

verbessert.

- Der Druckverformungsrest wird bei den eingesetzten freien Isocyanaten geringfügig erhöht, bei den blockierten Systemen bleibt er praktisch unverändert.

- Die Alterungsbeständigkeit der Vulkanisate sowohl bei 3 Tagen als auch bei 14 Tagen / 100°C ist innerhalb der Meßgenauigkeit als gleich anzusehen. Die gemessenen Werte für die Bruchdehnung nach Lagerung sind bei einigen Varianten mit Amininhibitorzusatz höher, wenn auch die Bruchdehnungsabnahme wegen der höheren Anfangswerte etwas größer ausfällt.

- Eine ganz erhebliche Reduzierung der Menge an bei der Vulkanisation freigesetzten sekundären Amine Dimethylamin, Morpholin und Dibutylamin direkt über dem geöffneten Vulkanisationswerkzeug schlägt sich auch in der Reduzierung der in diesem Bereich gefundenen, entsprechenden N-Nitrosamine gegenüber der Vergleichsmischung ohne Amininhibitor nieder. Die Tatsache, daß noch Restmengen an freien Aminen im Pressendampf vorliegen, kann an der mangelnden Reinheit der hier eingesetzten, kommerziell erhältlichen Amininhibitoren liegen. Eine Erhöhung der Inhibitormenge kann die Mengen an freien Aminen bis unter ihre analytische Nachweisgrenze reduzieren, wie im folgenden Beispiel 3 noch gezeigt wird.

- Bei einer offenen Lagerung von Vulkanisat-Platten bei Raumtemperatur über einen Zeitraum von drei Wochen war bei Variante B 1 ein deutlicher weißgrauer Belag von Ausblühungen an der Oberfläche zu erkennen. Die Proben B 2 bis B 8 hingegen zeigten in diesem Zeitraum keine oder nur geringe Spuren dieser Ausblühungen.

- Bis auf wenige geringfügig abweichende Ausnahmen wird in praktisch allen Fällen die Menge der aus den Vulkanisaten an die Umgebungsluft freigesetzten Amine unter der analytischen Nachweisgrenze der eingesetzten Bestimmungsmethode gefunden. Dies bedeutet z.B. im Falle des Dimethylamins eine Reduzierung auf < 0,9% der aus der Vergleichsmischung ohne Amininhibitorzusatz emittierten Menge. Eine Wiederholungsmessung der Probe B 2 bei um den Faktor 10 verlängerter Saugzeit zeigte, daß sogar eine Reduzierung auf maximal 0,09% (Nachweisgrenze) erreicht wird.

**Beispiel 3:**

In den beiden vorangegangenen Beispielen wurden die Amininhibitoren entsprechend ihrem (latenten) Isocyanatgehalt stöchiometrisch zu der aus den Vulkanisationssubstanzen maximal möglichen Menge an sekundären Aminen dosiert. Eine Verringerung der Aktivität der Inhibitoren z.B. durch Verunreinigungen bei technischen Produkten oder durch Reaktion mit Feuchtigkeit aus der Umgebungsluft bzw. der Elastomermischung bei Lagerung bzw. Mischungsherstellung blieb dabei unberücksichtigt. In dem vorliegenden Beispiel wird deshalb die Dosierung zweier Amininhibitoren variiert. Dabei wurde bewußt eine gezielte Unterdosierung vorgenommen, wie sie z.B. aus Kostengründen technisch relevant sein kann, wie auch eine deutliche Überdosierung, die eine erhöhte Geschwindigkeit der Inhibierungsreaktion zur Folge hat.

Für die Messungen wurde der gleiche Grundbatch wie in den Beispielen 1 und 2 mit dem Vulkanisationssystem B aus Beispiel 2 eingesetzt. Die Varianten B 2 / B 11 sowie B 6 / B 14 haben jeweils den gleichen Mischungsaufbau, wurden jedoch zu unterschiedlichen Zeitpunkten hergestellt.

Die folgenden Tabellen sowie Fig. 1 und 2 zeigen Art und Menge der eingesetzten Amininhibitoren und die mit den entsprechenden Vulkanisaten erhaltenen Meßergebnisse. Für die mechanisch-technologischen Eigenschaften, den Druckverformungsrest und die Lagerung in Heißluft ergaben sich mengenabhängig analoge Ergebnisse wie für die Varianten B 2 und B 6.

In Fig. 1 ist die Abhängigkeit der Mengen an freien Aminen im Pressendampf (Prüfmethode A 1) von der Menge an eingesetztem Amininhibitor (IPDI bzw. ein entsprechendes blockiertes Isocyanat) dargestellt. Die gestrichelte Linie gibt die Nachweisgrenze (<0,1 mg / $m^3$) an.

In Fig. 2 ist die Abhängigkeit der Mengen an ausgasenden Aminen beim Überleiten von Luft über Vulkanisatproben (Prüfmethode A 2) von der Menge an eingesetztem Amininhibitor analog Fig. 1 dargestellt.

**Mischungsyarianten:**

Die in Klammern angegebenen Werte geben den relativen Anteil des Inhibitors in Prozent, bezogen auf die den maximal möglichen Aminmengen stöchiometrische Dosierung in den Varianten B 11 bzw. B 14, an. Mengenangaben jeweils in phr.

| Aminhibitor / Variante | B 1 | B 9* | B 10* | B 11* (B 2) | B 12* | B 13 | B 14 (B 6) | B 15 |
|---|---|---|---|---|---|---|---|---|
| IPDI | — | 2,5 ( 48) | 3,5 (67) | 5,2 ( 100) | 7,5 ( 144) | — | — | — |
| Blockiertes Isocyanat gem. Anspruch 1 (NCO-Gehalt: 15,3 %) | — | — | — | — | — | 6,4 (50) | 12,8 (100) | 18,0 (141) |

Freie Amine im Pressendampf (Prüfmethode A 1)

Mengenangabe in mg Amin / m$^3$; die in Klammern angegebenen Werte geben den relativen Anteil (%) im Vergleich zur Variante B1 (ohne Amininhibitor) an. Vulkanisationsbedingungen: 185°C / 4 min.
Aufgrund der geänderten Vulkanisationsbedingungen (doppelte Vulkanisationszeit im Vergleich zu den entsprechenden Messungen in Beispiel 2) und einer etwas veränderten Positionierung der Probenahmeröhrchen findet man für die Variante ohne Amininhibitorzusatz niedrigere Aminkonzentrationen.

| Amin / Variante | B 1 | B 9* | B 10* | B 11* (B 2) | B 12* | B 13 | B 14 (B 6) | B 15 |
|---|---|---|---|---|---|---|---|---|
| DMA Dimethylamin | 1,99 | 1,61 (81) | 1,24 (62) | 0,13 (6,5) | < 0,1 | 1,50 (65) | 0,10 (5,0) | < 0,1 |
| MOR Morpholin | 5,07 | 3,76 (74) | 2,85 (56) | 0,26 (5,1) | < 0,1 | 2,99 (59) | 0,15 (2,9) | < 0,1 |
| DBA Di-n-butylamin | 0,64 | 0,43 (67) | 0,35 (55) | < 0,1 | < 0,1 | 0,42 (66) | < 0,1 | < 0,1 |

Diese Meßwerte sind in Fig. 1 graphisch dargestellt, wobei die jeweils eingesetzte Inhibitormenge auf der Abszisse, die ermittelten Mengen an freien Aminen im Pressendampf auf der Ordinate aufgetragen sind.

Ausgasende Amine aus Vulkanisat (Prüfmethode A 2)

Mengenangaben in mg Amin/m$^3$; die in Klammern angegebenen Werte geben den relativen Anteil (%) im Vergleich zur Variante B1 (ohne Amininhibitor) an.
Vulkanisationsbedingungen: 185°C / 4 min.

| Amin / Variante | B 1 | B 9* | B 10* | B 11* (B 2) | B 12* | B 13 | B 14 (B 6) | B 15 |
|---|---|---|---|---|---|---|---|---|
| DMA Dimethylamin | 12,33 | 4,61 (37) | 2,84 (23) | 0,25 (2,0) | < 0,1 | 1,21 (9,8) | 0,12 (1,0) | < 0,1 |
| MOR Morpholin | 7,93 | 3,42 (43) | 2,10 (26) | 0,13 (1,6) | < 0,1 | 0,69 (8,7) | < 0,1 | < 0,1 |
| DBA Di-n-butylamin | 0,84 | 0,36 (42) | 0,20 (24) | < 0,1 | < 0,1 | 0,10 (12) | < 0,1 | < 0,1 |

Diese Meßwerte sind in Fig. 2 graphisch dargestellt, wobei hier auf der Ordinate die ermittelten Mengen an aus dem Vulkanisat ausgasenden Aminen aufgetragen sind.

Aus den Meßdaten und den Figuren 1 und 2 lassen sich folgende Schlüsse ziehen:

- Mit zunehmender Dosierung des Amininhibitors nehmen sowohl die Mengen der im Pressendampf nachgewiesenen freien Amine als auch die Mengen der beim Überleiten von Laborluft über die Vulkanisate emittierten Amine ab.

- Bei ca. 50%iger Inhibitordosierung (Varianten B9 bzw. B13) werden die Mengen an freien Aminen im Pressendampf weniger stark erniedrigt als die entsprechenden Mengen der an überströmende Luft emittierten Amine. Ein analoger Befund ergibt sich für die stöchiometrische Dosierung.

- Bei dem blockierten Isocyanat (B13) ist bei etwa 50%iger Dosierung die Reduzierung der Menge an emittierten Aminen deutlich größer als bei dem nicht blockierten IPDI.

- In allen Fällen ergibt die überstöchiometrische Dosierung eine Reduzierung der betrachteten sekundären Amine unter die Nachweisgrenze der verwendeten analytischen Bestimmungsmethode.

- Die graphische Darstellung der Meßergebnisse läßt den Schluß zu, daß bereits eine gegenüber der stöchiometrischen Dosierung geringfügig (ca. 5%) erhöhte Isocyanat(spender)dosierung die gefundenen Aminmengen unter ihre analytische Nachweisgrenze reduzieren kann.

## Patentansprüche

1. Verwendung von Verbindungen, die erst unter Vulkanisationsbedingungen mono- oder multifunktionelle Isocyanate der allgemeinen Formel $R\text{-}(N{=}C{=}O)_x$ mit R = beliebiger organischer Rest und x $\geq$1 bilden, als Inhibitoren für Amine in zu vulkanisierenden Elastomermischungen, wobei
die Isocyanatgruppen in diesen Verbindungen

   - entweder mit aktivem Wasserstoff enthaltenden Blockierungsmitteln (R'-H) gemäß dem Reaktionsschema

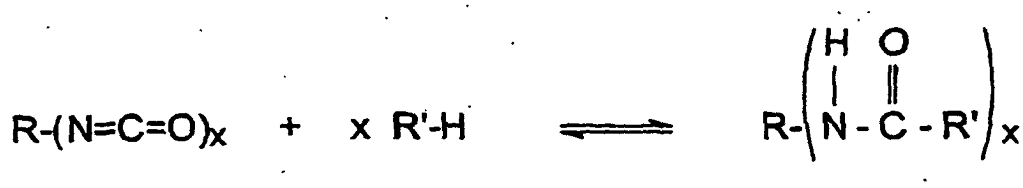

Inhibitor Blockierungsmittel

mit R, R' = beliebige organische Reste, x ≥1 und/oder

- durch Bildung von Uretdionstrukturen gemäß der Gleichung

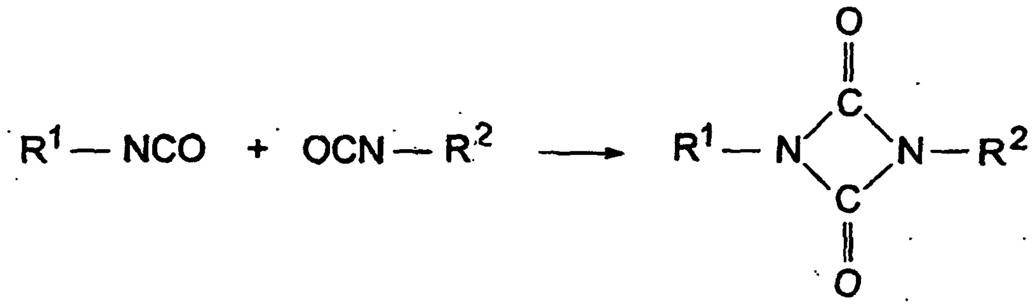

wobei $R^1$ und $R^2$ beliebige organische Reste darstellen, blockiert sind und die Verbindungen keine Stoffe freisetzen, die mit den Isocyanaten schneller reagieren können als die zu inhibierenden Amine.

**2.** Verwendung von Verbindungen nach Anspruch 1, **dadurch gekennzeichnet, daß** die blockierten Isocyanate in dimerer, oligomerer oder polymerer Form vorliegen.

**3.** Verwendung von Verbindungen nach Anspruch 1, **dadurch gekennzeichnet, daß** die Isocyanate durch primäre Amine chemisch blockiert sind.

**Claims**

**1.** Use of compounds which form mono- or multifunctional isocyanates of the general formula $R\text{-}(N{=}C{=}O)_x$ where R = any organic radical and x ≥ 1 under vulcanization conditions as inhibitors for amines in elastomer mixtures to be vulcanized, wherein the isocyanate groups in these compounds are blocked

- either by blocking agents containing active hydrogen (R'-H) in accordance with the reaction scheme

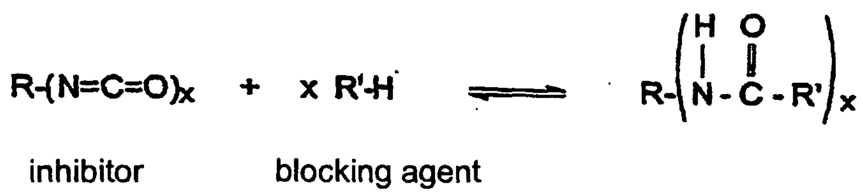


where R, R' = any organic radicals, x ≥ 1 and/or

- through formation of uretdione structures in accordance with the equation

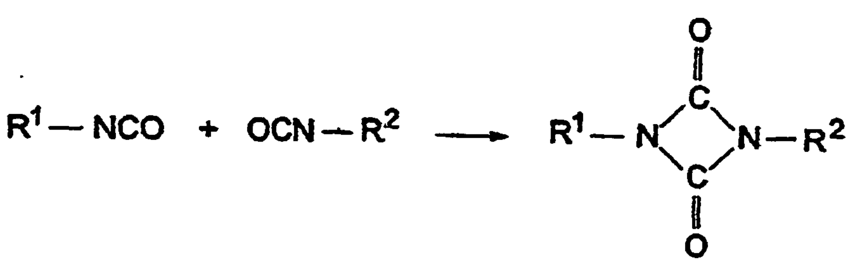

where $R^1$ and $R^2$ each represent an organic radical, and the compounds do not release entities capable of faster reaction with the isocyanates than the amines to be inhibited.

2. Use of compounds according to Claim 1, **characterized in that** the blocked isocyanates are in dimeric, oligomeric or polymeric form.

3. Use of compounds according to Claim 1, **characterized in that** the isocyanates are chemically blocked by primary amines.

## Revendications

1. Utilisation de composés qui forment, seulement dans des conditions de vulcanisation, des isocyanates mono- ou multifonctionnels de formule générale $R\text{-}(N{=}C{=}O)_x$, avec R = radical organique quelconque et $x \geq 1$, comme inhibiteurs pour amines dans des mélanges d'élastomères à vulcaniser,
les groupes isocyanate dans ces composés étant bloqués

- soit avec des agents bloquants contenant de l'hydrogène actif (R'-H) selon le schéma réactionnel

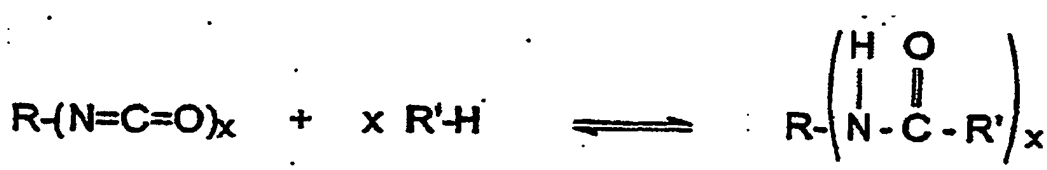

inhibiteur agents bloquants

avec R, R' = radicaux organiques quelconques, $x \geq 1$ et/soit
- par formation de structures d'uretdiones selon l'équation :

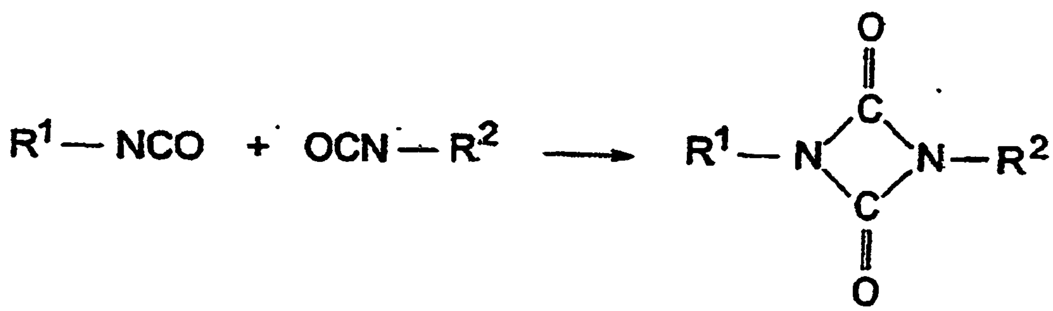

dans laquelle $R^1$ et $R^2$ représentent des radicaux organiques quelconques, et les composés ne libérant pas de matières qui peuvent réagir avec les isocyanates plus rapidement que les amines à inhiber.

2. Utilisation de composés selon la revendication 1, **caractérisée en ce que** les isocyanates bloqués se présentent sous forme de dimère, oligomère ou polymère.

3. Utilisation de composés selon la revendication 1, **caractérisée en ce que** les isocyanates sont chimiquement bloqués par des amines primaires.

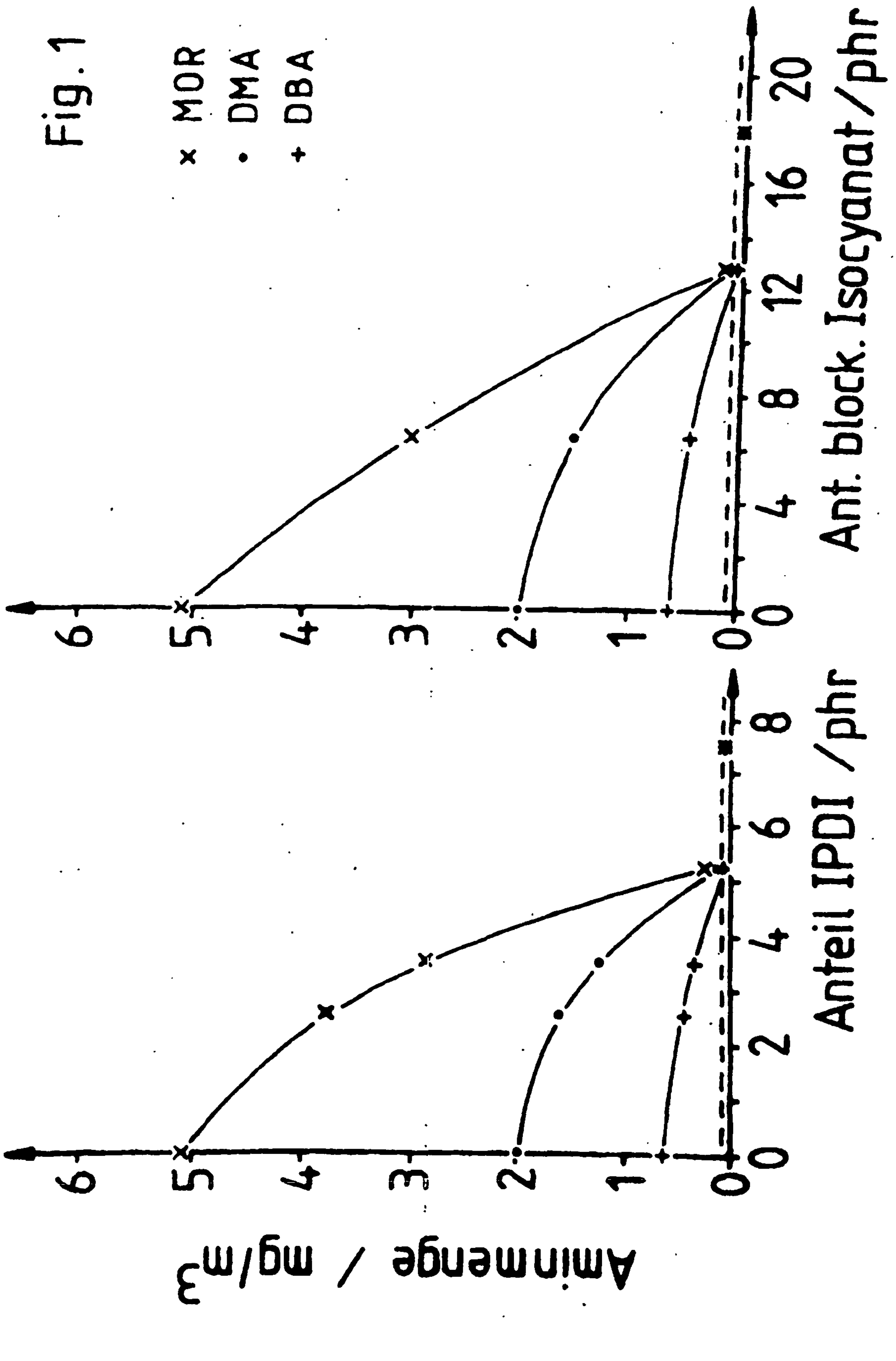
× MOR
• DMA
+ DBA
Aminmenge / mg/m³
0
1
2
3
4
5
6
Anteil IPDI /phr
0
2
4
6
8
Ant. block. Isocyanat/phr
0
4
8
12
16
20

Fig. 1

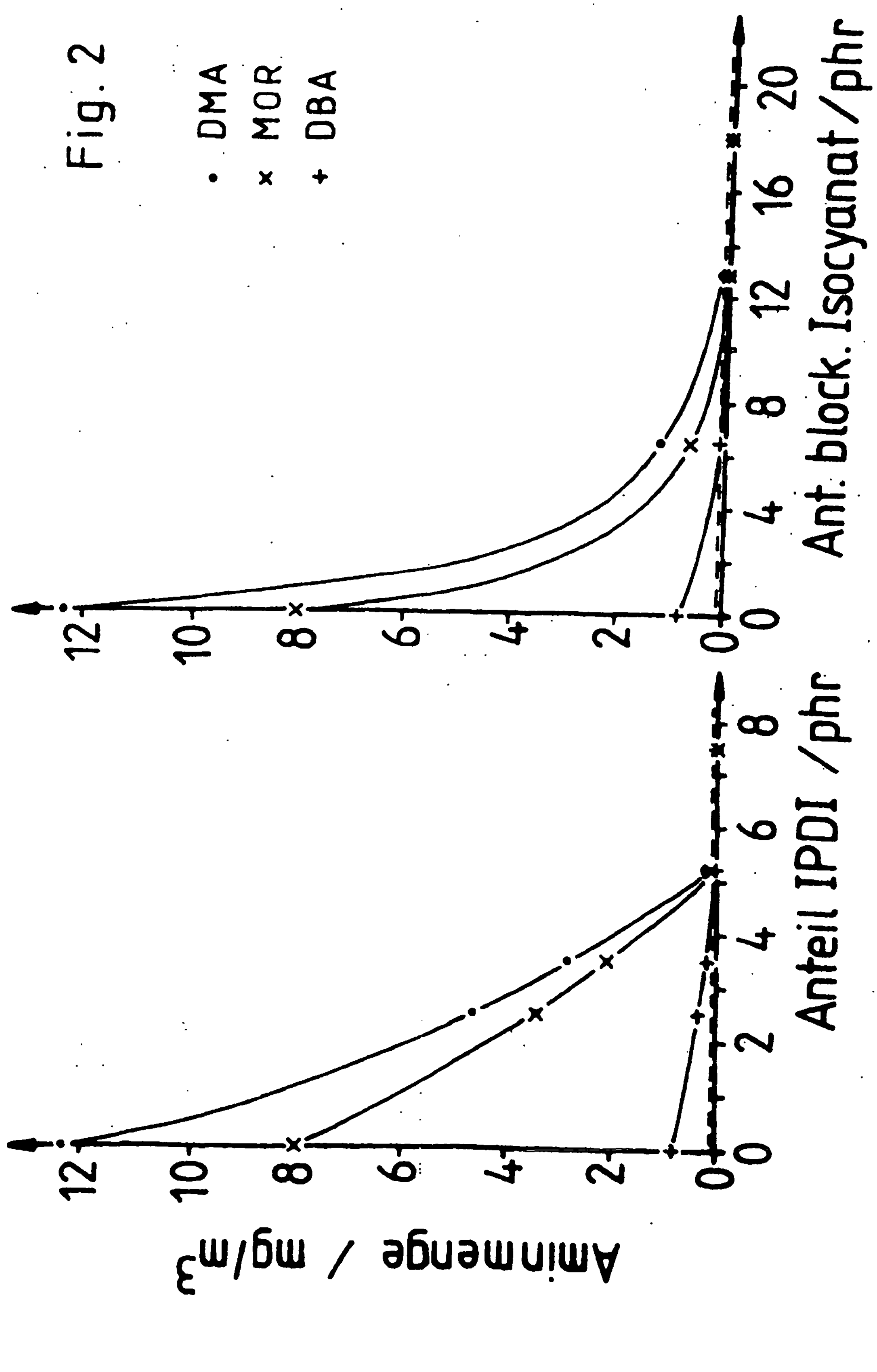

• DMA
× MOR
+ DBA
Aminmenge / mg/m³
Anteil IPDI /phr
Ant. block. Isocyanat /phr


Fig. 2